# EUROPEAN PATENT APPLICATION

(11) **EP 3 111 884 A1**
(43) Date of publication of application: **04.01.2017**
(21) Application number: 14880600.3
(22) Date of filing: 29.01.2014
(51) Int. Cl.: A61C 17/22

(54) **PERSONAL ELECTRIC CLEANING TOOL**

(71) Applicant: Shanghai Shift Electrics Co. Ltd, Shanghai 201506 (CN)
(72) Inventor: DAI, Xiaoguo, Shanghai 201506 (CN); XU, Zhenwu, Shanghai 201506 (CN)
(74) Representative: Gulde & Partner
(86) International application number: PCT/CN2014/071784
(87) International publication number: WO 2015/113264

(57) **Abstract**

A personal electric cleaning tool comprises: a handle (10) accommodating a driving element therein; a head (20) connected with a supporting body (22) supporting a cleaning element (21), the supporting body (22) defining a first engaging shape; and a transmission rod (31), one end thereof far away from the head (20) being operably connected to the driving element and the other end thereof near the head (20) being fixedly provided with a driving wheel (315) defining a second engaging shape matched with the first engaging shape, so that the supporting body (22) rotates in a reciprocating manner along with the driving wheel (315) as the transmission rod (31) is driven by the driving element, wherein one of the first engaging shape and the second engaging shape is a shape defined by two conical tooth surfaces (26, 27) facing each other on one bevel gear (315a, 315b), while the other one is a shape defined by one conical tooth engaged with the two conical tooth surfaces (26, 27). The head (20) of the personal electric cleaning tool is designed to be smaller in size, so that a user can more comfortably use.

## Description

### FIELD OF THE INVENTION

The present invention relates to a personal electric cleaning tool, specifically to an oral electric cleaning tool, and even more specifically, the oral electric cleaning tool is an electric toothbrush.

### BACKGROUND INFORMATION

There exists a variety of techniques for converting the rotary output from a motor or other electrical driving sources into a desired special motion required for a personal electric cleaning tool in the art. Many techniques comprise a rotating shaft as a part of the power train. The rotating shaft is rotatable, swingable or reciprocable. The rotating shaft is coupled to the supporting body of the cleaning element of the personal electric cleaning tool. Generally, the supporting body for the cleaning elements is driven around an axis perpendicular to the longitudinal axis of the rotating shaft by the rotating shaft in a rotatable or swingable way.

As a kind of the personal electric cleaning tools, the electric toothbrushes provide a number of advantages with respect to oral hygiene. For example, the toothbrush could remove spots and food residue so as to assist avoiding dental caries and diseases. They will remove the smeared part of the surface of each tooth so as to help whitening the teeth. Additionally, the bristles, in combination with the tooth brushing motion, could massage the gingival tissue to stimulate the tissue and improve the healthy of the tissue. Furthermore, the electric toothbrush could move at a very high velocity so that a better cleaning effect could be achieved. Usually, the electric toothbrush is powered through power supply elements, such as the disposable batteries or the rechargeable batteries, and the power supply elements mentioned above supply electric power to a driving element, such as a mini-type electrical motor, which in turn drives the cleaning unit, such as the toothbrush head, through a power train arranged between the driving element and the cleaning unit, to make the cleaning unit swing or rotate in a reciprocating manner so as to clean the tooth.

However, due to the fact that the existing electric toothbrush accommodates a reciprocal member in its head, the head is always configured to be large in its volume. When the head of such a toothbrush extends into the mouth cavity to perform tooth brushing operation, the user feels less comfortable.

### SUMMARY

In order to make a personal electric cleaning tool having a less volume for its head, the present invention discloses a personal electric cleaning tool comprising a handle, a head an a transmission rod. Wherein the handle accommodates a driving element therein, the head is connected with a supporting body for supporting cleaning elements, the supporting body defines a first engaging shape; one end of the transmission rod far away from the head is operably connected to the driving element, and the other end thereof near the head is fixedly provided with a driving wheel defining a second engaging shape matched with the first engaging shape, so that the supporting body rotate in a reciprocating manner along with the driving wheel when the transmission rod is driven by the driving element, when the transmission rod is driven by the driving element. Wherein one of the first engaging shape and the second engaging shape is a shape defined by two opposite conical tooth surfaces from one bevel gear, while the other one of the first engaging shape and the second engaging shape is a shape defined by one conical tooth engaged with the two conical tooth surfaces.

Further, the supporting body is provided with a stopper portion and the head is correspondingly provided with a matching stopper portion, the stopper portion and the matching stopper portion are always configured to engage with each other when the supporting body moves following the rotation of the transmission rod, thereby preventing the supporting body from disengaging from the head while allowing the supporting body to rotate around its rotational axis. In this way, when such a care tool is in use, the supporting body would not slide on its rotational axis or the supporting body only does a restrictive sliding on its rotational axis, thus it is possible to prevent it from disengaging from the head and flying off during its running.

Specifically, the stopper portion is a groove, and the matching stopper portion is a stopper pin, the groove is circumferentially opened onto the outer surface of the joining part of the supporting body, one end of the stopper pin is secured onto the head and the other end projects into the head and is accommodated within the groove.

Preferably, the number of the stopper pins is at least two.

Still preferably, the at least two stopper pins are evenly distributed around a first rotational axis of the supporting body in a plane perpendicular to the first rotational axis of the supporting body

Preferably, the gear part of the driving wheel defining the second engaging shape and the joining part of the supporting body are accommodated into the head.

Preferably, the rotational angle of the transmission rod is not greater than 90 degree, and correspondingly, the rotational angle of the supporting body is not greater than 90 degree either.

Preferably, the supporting body follows up around the first rotational axis, and transmission rod rotates around a second rotational axis essentially perpendicular to the first rotational axis.

Specifically, the personal electric cleaning tool is an oral cleaning tool.

More specifically, the oral cleaning tool is an electric toothbrush, and the aforesaid cleaning elements are bristles.

### BRIEF DESCRIPTION OF THE DRAWINGS

An explanation of the present invention will be made by describing the exemplary embodiments thereof in the following referring to the drawings, in which:
Fig.1 is a schematic view illustrating schematically an electric toothbrush according to one embodiment of the present invention;
Fig.2 is a front view illustrating schematically an electric toothbrush according to one embodiment of the present invention with the handle being removed;
Fig.3 is a sectional view taken in the A-A direction of Fig.2;
Fig. 4 is a schematic view illustrating schematically a part of the transmission rod and the driving wheel connected thereto of the electric toothbrush according to one embodiment of the present invention;
Fig.5 illustrates schematically the cleaning elements, the supporting body for supporting cleaning elements and the driving wheel matched with the supporting body of the electric toothbrush according to one embodiment of the present invention;
Fig.6 is a sectional view taken in the B-B direction of Fig.5;
Fig.7 is a sectional view taken along the B-B direction of Fig.5, wherein the driving wheel is removed;
Fig. 8 is a schematic view illustrating schematically the driving wheel, assembled onto the transmission rod, of the electric toothbrush according to one embodiment of the present invention;
Fig.9 is a schematic view illustrating schematically the electric toothbrush according to one embodiment of the present invention with the handle being removed, which illustrates in detail that the joining part of the supporting body is accommodated within the head;
Fig.10 is a schematic view of the Fig.9 with the supporting body and the driving wheel being removed;
Fig.11 is a side schematic view of Fig.9 including the whole supporting body;
Fig.12 is a schematic view of Fig.11 with the head and the neck housing being removed;
Fig.13 is a schematic view taken along the C-C direction of Fig.9, wherein the stopper pin, the whole supporting body and the driving wheel are illustrated.

Similar features in different drawings are indicated using similar reference numerals.

### DETAILED DESCRIPTION

When describing the following embodiments in detail, explanation is made referring the drawings constituting a part of this description. The drawings present specific embodiments by way of examples, and the present invention is implemented in these embodiments. The embodiments illustrated do not intend to be an exhaustive listing of all the embodiments according to the present invention. It should be understood that other embodiments may be employed and logical and structural variation can be made without departing from the scope of the present invention. The orientation terms in the drawings, such as "longitudinal", "radial" and the like, are used with reference to the orientation of the described drawings. Since the components in the embodiments of the present invention could be provided in a variety of orientations, such orientation terms are used merely for the purpose of explanation rather than being restrictive. Therefore, the specific embodiments below are not construed in a restrictive sense, and the scope of the present invention is defined by the attached claims.

One embodiment of the present invention is described in more detail in the following taking an electric toothbrush as an example in conjunction with the drawings, However, it is to be understood by the ordinary skilled in this art that, although the following explanation is made based on the example of an electric toothbrush, the present invention is not limited thereto. The present invention is useful for other oral care or cleaning tools, such as dental drill tools, tooth polishing tools, tooth grinding tools or oral surgery tools, and the like, in addition to electric toothbrushes. Moreover, besides the oral care or cleaning tools, the present invention can also apply to personal cleaning tools, such as shavers.

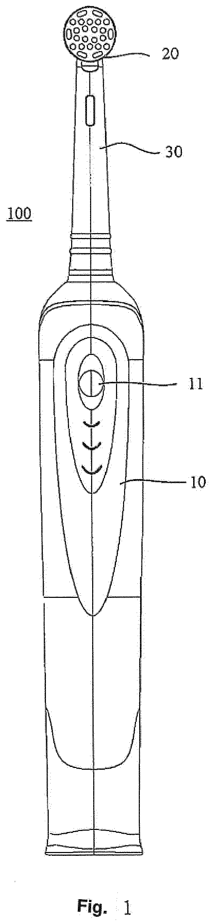

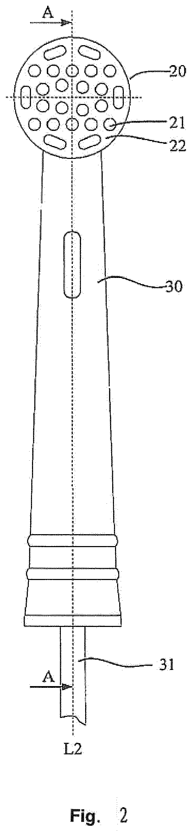

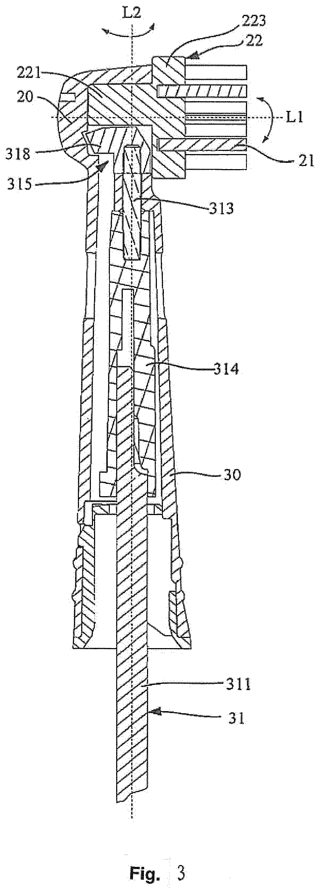

Fig.1 is a schematic view illustrating schematically an electric toothbrush 100 according to one embodiment of the present invention. Fig.2 is a front view illustrating schematically an electric toothbrush 100 according to one embodiment of the present invention with the handle being removed. Fig.3 is a sectional view taken in the A-A direction of Fig.2.

Referring Figs. 1-3, the electric toothbrush 100 according to one embodiment of the present invention comprises a handle 10, a head 20 and a neck 30 extending between the handle 10 and the head 20. Typically, the neck 30 and the head 20 aforesaid may be two parts of one integral component.

The handle 10 usually accommodates an electricity supply component, such as a rechargeable battery, and a driving element, such as an electrical motor, and the outer surface of the handle 10 is also provided with a switch 11 for closing or opening the electrical connection between the electricity supply component and the driving element.

The head 20 is connected with a supporting body 22 for supporting the cleaning elements 21, wherein the cleaning elements 21 are shown as bristles, and the supporting body 22 is shown as a bristle disk. Specifically, the supporting body 22 comprises a joining part 221 that can be accommodated within the head 20 and a securing part 223 which further extends from the joining part 221 along its first rotational axis L1 and simultaneously extends in a radial direction perpendicular to its first rotational axis L1 for securing the cleaning elements 21. The aforesaid cleaning elements 21, such as the bristles, are all anchored onto the securing part 223, and the joining part 221 is accommodated within the head 20 and is rotatable around the first rotational axis L1.

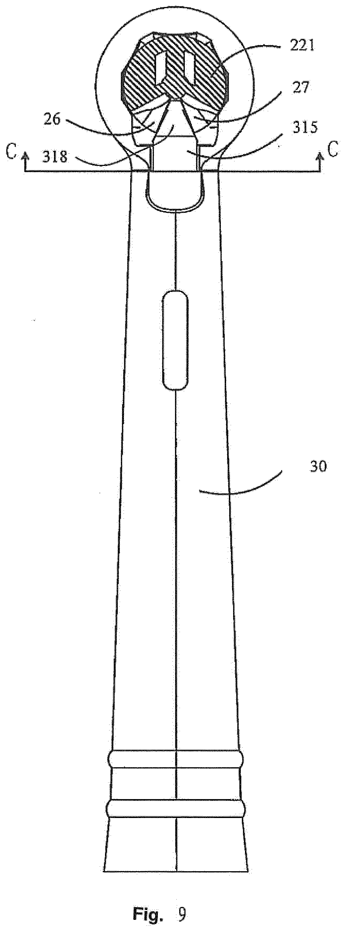

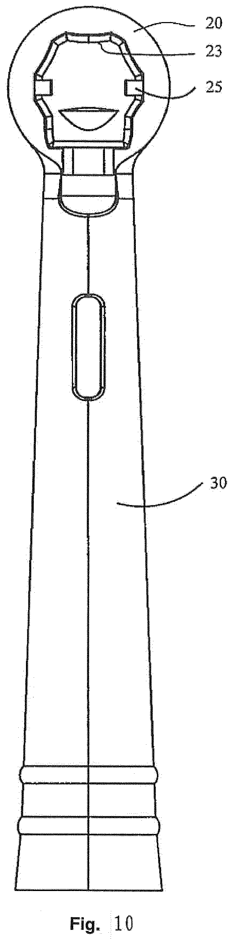

Fig.9 is a schematic view illustrating schematically the electric toothbrush according to one embodiment of the present invention with the handle being removed, which illustrates in detail that the joining part of the supporting body is accommodated within the head. Fig.10 is a schematic view of the Fig.9 with the supporting body and the driving wheel being removed.

Referring to Figs. 3, 9 and 10, the inner surface of the head 20 comprises a plurality of inner sides 23, and correspondingly, the joining part 221 of the supporting body 22 is essentially cylindrical except for its hollow portion. When the joining part 221 is installed into the head 20, the outer surface of the joining part 221 is essentially tangent to each of the inner sides 23 of the head 20, thereby the joining part 221 is constrained by these inner sides 23 so as to be able to rotate around the first rotational axis L1. It should be understood that the inner surface of the head 20 may be of any other suitable shapes, while the joining part 221 of the supporting body 22 may also be of any other suitable shapes that can be accommodated within the head 20, so long as the head 20 could constrain the joining part 221 of the supporting body 22 to rotate around its first rotational axis L1. This means that it is unnecessary for the shape of the inner surface of the head 20 to correspond to that of the joining part 221 of the supporting body 22. For example, in an embodiment (not shown), a shaft can be fixed onto the first rotational axis L1 of the head 20, while a hole for installing the supporting body 22 onto the aforesaid shaft is opened along the first rotational axis L1 of the joining part 221 of the supporting body 22, thereby, the supporting body 22 is rotatably installed onto the head 20 around its first rotational axis L1.

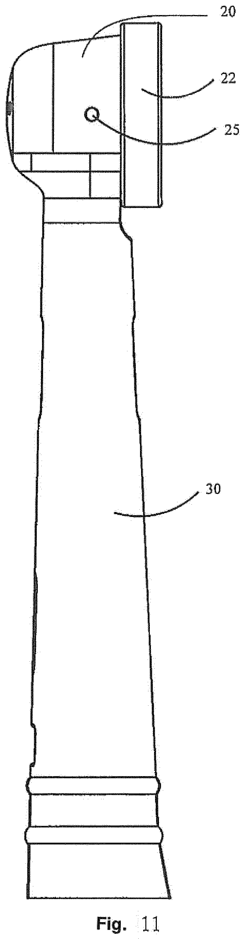

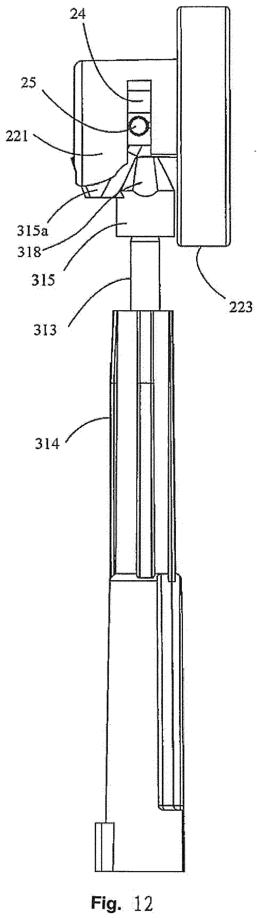

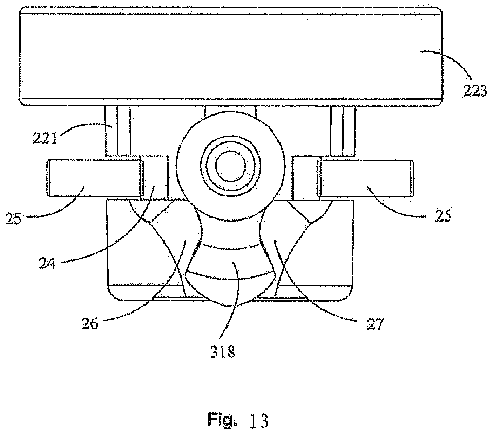

Fig.11 is a side schematic view of Fig.9 including the whole supporting body. Fig.12 is a schematic view of Fig.11 with the head and the neck housing being removed. Fig.13 is a schematic view taken along the C-C direction of Fig.9, wherein the stopper pin, the whole supporting body and the driving wheel are illustrated.

Turn to Figs. 11-13, a pair of opposite arc-shaped grooves 24 are circumferentially opened onto the outer surface of the joining part 221. Correspondingly, a pair of stopper pins 25 opposite to each other in the radial direction is further secured onto the head 20, each of the stopper pins 25 has its one end secured onto the head 20 and its another end projecting into the head 20 so as to be accommodated into and engage with one of the arc-shaped grooves, respectively. Thereby, when the supporting body 22 rotates around the first rotational axis L1, the aforesaid pair of stopper pins 25 is always positioned within the corresponding arc-shaped grooves 24 and engages therewith, so as to restrict the supporting body 22 from disengaging from the head 20 and flying off. It should be understood that the arc of the arc-shaped grooves 24 has a length that should be equal to or greater than the rotational stroke of the supporting body 22.

It should also be understood that, in one embodiment (not shown), an arc-shaped groove may be opened onto the outer surface of the joining part 221 circumferentially, and correspondingly, only one stopper pin matched with the arc-shaped grooves may be secured onto the head 20. When the supporting body 22 rotates around the first rotational axis L1, the stopper pin is always positioned within the arc-shaped groove and engages therewith, so as to restrict the supporting body 22 from disengaging from the head 20 and flying off. However, due to the fact that, when one stopper pin restricts the supporting body 22 from sliding along the first rotational axis L1, the actual contact portion between the stopper pin and the supporting body 22 is a line, and further, there exists motion gap between the head 20 and the joining part 221 of the supporting body 22. That is to say, on the one hand, the head 20 restricts the joining part 221 of the supporting body 22 to rotate around the first rotational axis L1, on the other hand, the gap existed between the head 20 and the joining part 221 of the supporting body 22 would lead to the occurrence of an angle between the actual rotational axis of the supporting body 22 and the first rotational axis L1. Therefore, when the supporting body 22 rotates around the first rotational axis L1, a single stopper pin can not restrict steadily the supporting body 22 from sliding along the first rotational axis L1, and the actual rotational axis of the supporting body 22 could form a varying angle with the first rotational axis L1, thereby a crevice ever changing in its magnitude and orientation could be formed between the securing part 223 of the supporting body 22 and the head 20. As a result, the crevice ever changing in its magnitude and orientation formed between the head 20 and the securing part 223 of the supporting body 22 rotating in a high-speed and reciprocal way may be at risk of pinching the oral tissues.

Preferably, in another embodiment (not shown), at least one groove may be opened onto the outer surface of the joining part 221 of the supporting body 22 circumferentially, for example, there may be opened with only one annular groove or more than two arc-shaped grooves, and correspondingly, more than two stopper pins matched with the groove(s) may be secured on the head 20.

More preferably, in still another embodiment (not shown), at least one groove may be opened onto the outer surface of the joining part 221 of the supporting body 22 circumferentially, and correspondingly, more than two stopper pins matched with the groove(s) may be secured on the head 20. Moreover, the more than two stopper pins are evenly distributed around the first rotational axis L1 in a plane perpendicular to the first rotational axis L1.

Alternatively, the aforesaid arc-shaped grooves 24 may be opened onto the head 20, while the stopper pin 25 may be secured onto the joining part 221 of the supporting body 22. It should also be understood that other stopper portions may be provided on the joining part 221 of the supporting body 22, while the matching stopper portions are correspondingly provided on the head 20, which can be configured to always engage the stopper portions with the matching stopper portion during the rotational motion of the supporting body 22, so that the supporting body 22 is prevented from sliding along the first rotational axis L1 of the head 20, or alternatively, the supporting body 22 is allowed to merely perform restrictive sliding along the first rotational axis L1 of the head 20, thereby protecting the supporting body 22 against disengaging from the head 20 and flying off. This is of vital importance in view of the safety of the oral cleaning tool, since, once the supporting body 22 flies off when rotating at a high speed, it could hurt the user's oral cavity, tongue and/or throat, and extremely dangerous, enter into the digestive tract.

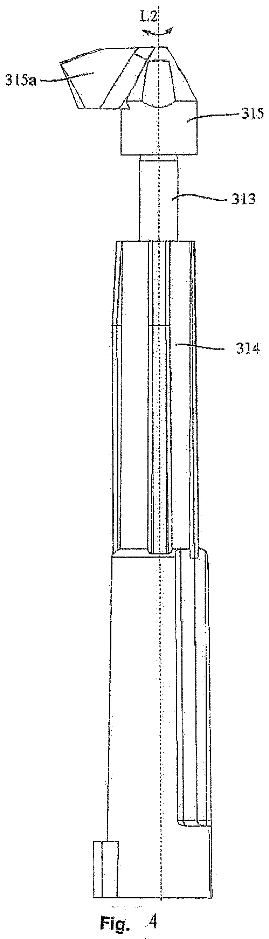

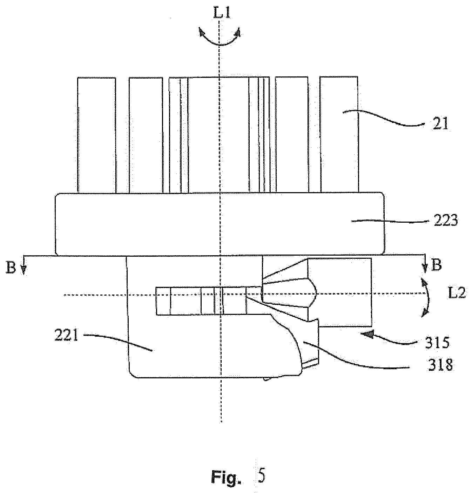

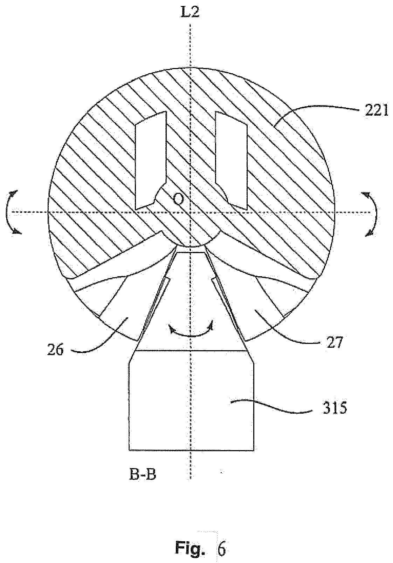

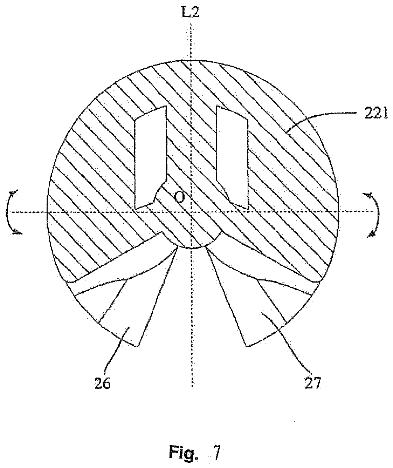

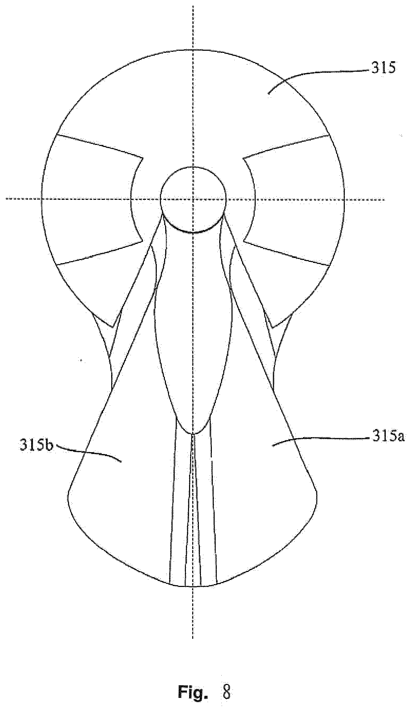

Fig. 4 is a schematic view illustrating schematically a part of the transmission rod and the driving wheel fixed thereto of the electric toothbrush according to one embodiment of the present invention. Fig.5 illustrates schematically the cleaning elements, the supporting body for supporting cleaning elements and the driving wheel matched with the supporting body of the electric toothbrush according to one embodiment of the present invention. Fig.6 is a sectional view taken in the B-B direction of Fig.5. Fig.7 is a sectional view taken along the B-B direction of Fig.5, wherein the driving wheel is removed. Fig.8 is a schematic view illustrating schematically the driving wheel assembled onto the transmission rod of the electric toothbrush according to one embodiment of the present invention.

Turn to Figs. 3-8, the neck 30 accommodates a transmission rod 31 extending in a longitudinal direction therein, the transmission rod 31 has one end thereof far away from the head 20 operably connected to the driving element, such as an electrical motor, and another end thereof near the head 20 connected to the supporting body 22, thereby the transmission rod 31 rotates in a reciprocating manner within a predetermined angle range driven by the driving element, and at the same time, the supporting body 22 also rotates in a reciprocating manner driven by the transmission rod 31. Specifically, the transmission rod 31 comprises a handle driver shaft section 311, a head driver shaft section 313 and a coupling 314 for connecting the handle driver shaft section 311 and the head driver shaft section 313 together, wherein the handle driver shaft section 311 and the head driver shaft section 313 have an identical rotational axis L2 (the second rotational axis), moreover, the second rotational axis L2 is essentially perpendicular to the first rotational axis L1 of the aforesaid supporting body 22. In the examples of the present invention, the handle driver shaft section 311 rotates in a reciprocating manner around its second rotational axis L2 at a rotational angle less than 90 degree, while the head driver shaft section 313 also rotates around the second rotational axis L2 at the same rotational angle. The handle driver shaft section 311 of the transmission rod 31 can be connected to the electrical motor through the structures as well-known by the ordinary skilled in this art, such as a four-bar linkage mechanism, so as to convert the rotary motion of the electrical motor into a reciprocal rotational motion within a predetermined angle range, herein, because there are a lot of specific similar mechanisms in prior art, such structures are not illustrated in detail throughout the drawings of the present application for the purpose of saving space. Moreover, it should be further understood that, although the coupling 314 is used to transmit the kinetic energy of the handle driver shaft section 311 to the head driver shaft section 313 in the illustrated embodiment, it is also possible to employ any transmission mechanisms that can transmit the reciprocal rotation of the handle driver shaft section 311 to the head driver shaft section 313 and cause the same to rotate reciprocally in a predetermined angle range. The head driver shaft section 313 of the transmission rod 31 has one end thereof far away from the driving element fixedly provided with a driving wheel 315, the driving wheel 315 is provided with only one conical tooth. As shown in Fig.8, the conical tooth comprises conical tooth surfaces 315a, 315b. Correspondingly, the supporting body 22, as being driven by such driving wheel 315, defines two opposite conical tooth surface 26 , 27 of one bevel gear, engaged with the aforesaid one conical tooth, and the two conical tooth surfaces 26, 27 define the aforesaid hollow portion. As shown in Figs. 6 and 7, in more detail, the conical tooth surface 26 of the supporting body 22 may engage with the conical tooth surface 315a of the driving wheel 315, and the conical tooth surface 27 of the supporting body 22 may engage with the conical tooth surface 315b of the driving wheel 315. Because the conical tooth surfaces 26, 27 are two opposite conical surfaces of one integrated bevel gear, the conical tooth surfaces 26, 27 have the same conical point of the bevel gear. Furthermore, the conical tooth surfaces 26, 27 are in an eccentric arrangement with respect to point O, i.e., the rotating center of the supporting body 22.

As shown in Figs. 3, 5, 9 and 12, the gear part 318 of the driving wheel 315 defining one conical tooth mentioned above, and the joining part 221 of the supporting body 22 are accommodated into the head 20, that is to say, the gear part of the driving wheel 315 defining the second engaging shape and the joining part 221 of the supporting body 22 are accommodated into the head 20.Such an arrangement is advantageous in that it is possible to enhance the safety of the electric toothbrush 100.

It should be understood that the transmission ratio between the conical shape teeth of the aforesaid driving wheel 315 and the conical tooth surfaces 26, 27 of the supporting body 22 can be set to be any proper values as required, that is to say, the transmission can be an accelerating type, decelerating type or a constant speed transmission. In this embodiment, the transmission ratio is 1:1.

It should be also understood that, in another embodiment, the joining part 221 of the supporting body 22 may be provided with one conical tooth, while the driving wheel 315 secured onto the transmission rod 31 may be provided with two facing conical tooth surfaces of one integrated bevel gear, these conical tooth surfaces engaging with the one conical tooth. The aforesaid two conical tooth surfaces define a hollow portion, and one conical tooth on the joining part 221 of the aforesaid supporting body 22 is placed into the hollow portion in order to engage with the two conical tooth surfaces, respectively. In such an embodiment, the gear part defining the two conical shape tooth surfaces of the aforesaid driving wheel 315 and the joining part 221 of the supporting body 22 are also accommodated within the head 20, that is to say, the gear part of the driving wheel 315 defining the second engaging shape and the joining part 221 of the supporting body 22 are accommodated within the head 20. Such an arrangement is advantageous in that it is possible to provide the safety of the electric toothbrush.

It should be also understood that, in other embodiments, the joining part 221 of the supporting body 22 could define the first engaging shape, and the driving wheel 315 of the transmission rod 31 could define the second engaging shape matched with the first engaging shape, such that the supporting body 22 can be driven by the driving wheel 315. The first engaging shape includes but is not limited to the one defined by the aforesaid two conical tooth surfaces or one conical tooth, in a similar way, the second engaging shape includes but is not limited to the one defined by the aforesaid one conical tooth or two conical tooth surfaces. For example, the first engaging shape may be one defined by a worm rod, and correspondingly, the second engaging shape may be one defined by a worm gear cooperating with the aforesaid worm rod.

When a user places the switch 11 on the handle 10 of the electric toothbrush 100 into its open position, the electrical motor accommodated within the handle 10 of the electric toothbrush 100 is started, and the electrical motor drives the handle driver shaft section 311 through a well-known transmission unit, the handle driver shaft section 311 transmits the kinetic energy to the head driver shaft section 313 through the coupling 314, and the driving wheel 315 is driven by the head driver shaft section 313.As a result, the transmission rod 31, formed by the combination of the handle driver shaft section 311, the head driver shaft section 313 and the coupling 314, drives the driving wheel 315 secured at the end far away from the driving element to rotate reciprocally within a predetermined rotational angle generally less than 90 degree (typically, 60 degree or so) around the second rotational axis L2.When the driving wheel 315 makes an anticlockwise rotation around the second rotational axis L2, the conical tooth surface 315a of the driving wheel 315 presses the conical tooth surface 26 of the supporting body 22, and the supporting body 22 makes a clockwise rotation around the first rotational axis L1. When the driving wheel 315 makes a clockwise rotation around the second rotational axis L2, the conical tooth surface 315b of the driving wheel 315 press the conical tooth surface 27 of the supporting body 22, and the supporting body 22 makes an anticlockwise rotation around the first rotational axis L1.No matter which direction to rotate, the kinetic energy transmission between the driving wheel 315 and the supporting body 22 is accomplished by the conical tooth surface of the driving wheel 315 and the conical tooth surface of the supporting body 22 engaged with each other. The cleaning elements 21 perform cleaning action upon the clean surface (such as, the tooth surface) with the reciprocal rotation of the supporting body 22 around the first rotational axis L1.

The present invention is by no means restricted to the exemplary embodiments presented in the specification and the drawings. All of the combination of (part of) the illustrated and described embodiments are explicitly construed as being incorporated into the specification and is explicitly understood as falling into the scope of the present invention. Moreover, various modifications are possible within the scope of the present invention as generalized by the claims. Furthermore, any reference marks in the claims should not be construed as restricting the scope of the present invention. For example, the aforesaid "personal cleaning tool" is not limited to the foregoing exemplary electric toothbrush, but could comprise electric shavers for example. The ordinary skills in this art is readily appreciated that, on the one hand, due to the fact that the cleaning elements performing shaving action are blades, thus when the aforesaid electric toothbrush is deformed into an electric shaver, it is required to make appropriate deformation to the cleaning elements, on the other hand, because the blade, which is a cleaning element during shaving, should reciprocate at a higher speed than that of the bristles, which are cleaning elements during tooth brushing, the transmission type could be deformed into an accelerating type transmission. The aforesaid "personal cleaning tool" may also comprise electrical shoe brushes, which can remove dust from the shoe top or polish the shoe top. The ordinary skilled in this art should readily appreciated that such an electrical shoe brush has a very similar operating principle to that of the electric toothbrush, except for the possibility of making a number of adaptive modification to the cleaning elements according to actual requirements.

The present invention is by no means restricted to the exemplary embodiments presented in the specification and the drawings. All of the combination of (part of) the illustrated and described embodiments are explicitly construed as being incorporated into the specification and is explicitly understood as falling into the scope of the present invention. Moreover, various modifications are possible within the scope of the present invention as generalized by the claims. Furthermore, any reference marks in the claims should not be construed as restricting the scope of the present invention.

## Claims

1. A personal electric cleaning tool comprising:
a handle accommodating a driving element therein;
a head connected with a supporting body supporting a cleaning element, the supporting body defining a first engaging shape;
a transmission rod, one end thereof far away from the head being operably connected to the driving element and the other end thereof near the head being fixedly provided with a driving wheel defining a second engaging shape matched with the first engaging shape, so that the supporting body rotates in a reciprocating manner along with the driving wheel as the transmission rod is driven by the driving element;
wherein one of the first engaging shape and the second engaging shape is a shape defined by two opposite conical tooth surfaces from one bevel gear, while the other one of the first engaging shape and the second engaging shape is a shape defined by one conical tooth engaged with the two conical tooth surfaces.

2. The personal electric cleaning tool according to claim 1, wherein the supporting body is provided with a stopper portion and the head is correspondingly provided with a matching stopper portion, the stopper portion and the matching stopper portion are always configured to engage with each other when the supporting body moves following the rotation of the transmission rod, thereby preventing the supporting body from disengaging from the head while allowing the supporting body to rotate around its rotational axis.

3. The personal electric cleaning tool according to claim 2, wherein the stopper portion is a groove, and the matching stopper portion is a stopper pin, the groove is circumferentially opened onto the outer surface of the joining part of the supporting body, one end of the stopper pin is secured onto the head, and the other end projects into the head and is accommodated within the groove.

4. The personal electric cleaning tool according to claim 3, wherein the number of the stopper pins is at least two.

5. The personal electric cleaning tool according to claim 4, wherein the at least two stopper pins are evenly distributed around a first rotational axis of the supporting body in a plane perpendicular to the first rotational axis of the supporting body.

6. The personal electric cleaning tool according to claim 1, wherein the gear part of the driving wheel defining the second engaging shape and the joining part of the supporting body are accommodated into the head.

7. The personal electric cleaning tool according to claim 1, wherein the rotational angle of the transmission rod is not greater than 90 degree, and correspondingly, the rotational angle of the supporting body is not greater than 90 degree either.

8. The personal electric cleaning tool according to claim 1, wherein the supporting body follows up around the first rotational axis, and transmission rod rotates around a second rotational axis essentially perpendicular to the first rotational axis.

9. The personal electric cleaning tool according to claim 1, wherein the personal electric cleaning tool is an oral cleaning tool.

10. The personal electric cleaning tool according to claim 9, wherein the oral cleaning tool is an electric toothbrush.

11. The personal electric cleaning tool according to claim 10, wherein the cleaning elements are bristles.

12. The personal electric cleaning tool according to claim 1, wherein the personal electric cleaning tool is an electric shaver or an electrical shoe brush.
